# EUROPÄISCHE PATENTSCHRIFT

(11) **EP 0 878 515 B1**
(45) Veröffentlichungstag und Bekanntmachung des Hinweises auf die Patenterteilung: **24.07.2002**
(21) Anmeldenummer: 98107458.6
(22) Anmeldetag: 23.04.1998
(51) Int. Cl.: C09B 61/00, A23L 1/275, A23C 9/13

(54) **Verwendung von Carotinoiden als Farbstabilisator von Riboflavin und Riboflavinderivaten**
Use of caritenoids as colour stabilizers of riboflavin and riboflavin derivatives
Usage de caroténoides comme stabilisants de la riboflavine et des dérivés de la riboflavine

(30) Priorität: 16.05.1997 DE 19720802
(43) Veröffentlichungstag der Anmeldung: 18.11.1998
(73) Patentinhaber: BASF AKTIENGESELLSCHAFT, 67056 Ludwigshafen (DE)
(72) Erfinder: de Potzolli, Bernd, Dr., 67098 Bad Dürkheim (DE)

(56) Entgegenhaltungen:
- WO-A-97/15201
- US-A- 4 574 086
- US-A- 4 689 245
- US-A- 5 336 510
- PATENT ABSTRACTS OF JAPAN vol. 008, no. 232 (C-248), 25. Oktober 1984 & JP 59 113860 A (SHIGERU ISHIZEKI), 30. Juni 1984
- DATABASE WPI Section Ch, Derwent Publications Ltd., London, GB; Class B07, AN 71-72342S XP002076535 & JP 46 038 591 B (TAKEDA CHEM IND LTD)
- DATABASE WPI Section Ch, Week 8041 Derwent Publications Ltd., London, GB; Class D13, AN 80-72433C XP002076536 & JP 55 111 752 A (TOYO INK MFG CO)
- L.J.MACHLIN: "Handbook of vitamins,second edition" 1990 , MARCEL DEKKER , NEW YORK,N.Y. XP002076534 pages 288 - 290 * das ganze Dokument *

## Beschreibung

Die vorliegende Erfindung betrifft die Verwendung von Carotinoiden zur Farbstabilisierung von Riboflavin und Riboflavinderivaten.

Zum Färben von Lebensmitteln gewinnen natürliche oder naturidentische Lebensmittelfarbstoffe immer mehr an Bedeutung. Ein Hauptgrund für diesen Trend liegt zweifelsohne in der mangelnden Akzeptanz synthetischer Lebensmittelfarbstoffe durch den Verbraucher.

Die bekanntesten Vertreter natürlicher oder naturidentischer Lebensmittelfarbstoffe sind u.a. Carotinoide, insbesondere β-Carotin, Apocarotenal und Canthaxanthin sowie Porphyrinfarbstoffe, Anthocyane, Beetenrot und Riboflavin oder Riboflavinderivate.

Zur Gelbfärbung von Lebensmittel werden aus der Reihe der natürlichen oder naturidentischen Lebensmittelfarbstoffe hauptsächlich β-Carotin oder Riboflavin verwendet. Während der Zusatz von β-Carotin zu einem gelb-orange gefärbten Produkt führt, lassen sich durch Verwendung von Riboflavin leuchtend gelbe bis gelb-grüne Farbtöne erzielen. Somit stehen dem Anwender mit den beiden o.g. Farbstoffen eine breite Palette unterschiedlicher Gelbtöne zur Verfügung.

Sowohl Carotinoide als auch Riboflavin und deren 5'-Phosphat eignen sich zur Färbung von Molkereiprodukten, beispielsweise von Yoghurt- und Quarkprodukten [J.N. Counsell, C.J. Knewstubb, Food Flavourings, Ingreedients, Packaging and Processing (1983) 5(8), 18-23 und V.M. Ghorpade, S.S. Deshpande, D.K. Salunkhe in Food. Addit. Toxicol. (1995), 210-214, Verlag: Dekker, New York]

US 4,689,245 beschreibt pulverförmige Kaffeeweißer auf Basis entrahmter Milch, deren "Weißkraft" durch Zugabe von β-Carotin und Riboflavin verbessert wurde.

WO-A-9 715 201 beschreibt die Verwendung von Riboflavin und/oder β-Carotin als Färbemittel für Getränkemixturen.

Darüberhinaus existieren zahlreiche Patentschriften, in denen u.a. β-Carotin und Riboflavin zur Vitaminierung von Nahrungsmitteln eingesetzt werden. So beschreibt JP 07079748-A ein Getränk, das neben Zucker, Raffinose und einem Algenextrakt β-Carotin und Riboflavin in einem Verhältnis bis 1 : 40 enthält.

In WO 94/06415 sind Multivitaminpräparate genannt, die u.a. 0 bis 4500 I.U. β-Carotin und 0 bis 3.7 mg Riboflavin enthalten können.

Bei der Verwendung von Riboflavin zur Erzielung einer gelb bis gelb-grünen Einfärbung von Molkereiprodukten, wurde jedoch beobachtet, daß bereits nach einer Lagerzeit von einem Tag eine deutliche Abnahme der Farbintensität bis hin zu einer vollständigen Entfärbung von Yoghurt auftritt. Es zeigte sich weiterhin, daß dieser Prozeß der Entfärbung reversibel ist, d.h. durch kräftiges Schütteln oder Rühren des Yoghurts in Gegenwart von Luftsauerstoff tritt der ursprüngliche Farbton wieder auf.

Es war daher die Aufgabe, ein farbstabilisiertes Riboflavin zum Färben von Milchsäurebakterien enthaltenden Lebensmitteln zu entwickeln, bei dem der oben genannte. Nachteil, nämlich die Entfärbung des Lebensmittels, nicht auftritt.

Diese Aufgabe wurde erfindungsgemäß gelöst durch die Verwendung von Carotinoiden als Farbstabilisator von Riboflavin und/oder Riboflavinderivaten.

Die Carotinoide, die im Rahmen der Erfindung eingesetzt werden, sind die bekannten, zugänglichen, natürlichen oder naturidentischen Vertreter dieser Klasse von Verbindungen, z.B. β-Carotin, Astaxanthin, Lycopin, Bixin, Zeaxanthin, Cryptoxanthin, Citranaxanthin, Lutein, Canthaxanthin, β-Apo-4'-carotinal, β-Apo-8'-carotinal. Besonders bevorzugt werden die bisher technisch gut zugänglichen Carotinoide wie β-Carotin, Astaxanthin, Canthaxanthin, Lycopin und β-Apo-8' -carotinal einzeln oder als Mischung verwendet.

Unter Riboflavinderivate sind beispielsweise phosphorylierte Verbindungen von Riboflavin wie Riboflavin-5'-phosphat zu verstehen.

So wurde überraschenderweise gefunden, daß in Lebensmitteln, insbesondere in Molkereiprodukten, bei denen der typisch gelbe bis gelb-grüne Farbton durch Zusatz von Riboflavin bzw. Riboflavinderivaten oder deren Mischung eingestellt wurde, diese Gelbfärbung durch Zugabe von β-Carotin über einen Zeitraum von mindestens 40 Tagen stabil bleibt.

Das zur Farbstabilisierung von Riboflavin bzw. Riboflavinderivaten verwendete β-Carotin wird dabei in Konzentrationen von 0,05 bis 30 Gew.-%, vorzugsweise von 0, 1 bis 20 Gew.-%, besonders bevorzugt von 0,5 bis 5 Gew.-%, bezogen auf Riboflavin und/oder Riboflavinderivaten, eingesetzt. Dabei kann es sich bei den genannten Verbindungen sowohl um synthetisch hergestelltes (naturidentisches) Material als auch um Produkte aus natürlichen Quellen (natürliches Material) handeln.

Ein wesentliches Merkmal der verwendeten Riboflavin/Carotinoid-Kombination ist es, daß das eingesetzte Carotinoid bevorzugt in solchen Mengen den Lebensmitteln zugesetzt wird, in denen es selbst keine färbende, sondern lediglich eine farbstabilisierende Wirkung zeigt und somit die durch Riboflavin erzeugte, charakteristische Gelbfärbung nicht verändert.

Die o.g. Kombination aus Riboflavin oder Riboflavinderivaten oder deren Mischung und mindestens einem Carotinoid, insbesondere β-Carotin eignet sich als Färbemittel, insbesondere für Lebensmittel, besonders bevorzugt für Molkereiprodukte, wobei unter Molkereiprodukte insbesondere Frischkäse-, Quark-, Kefir-, Dickmilch-, Buttermilch- oder Yoghurtzubereitungen zu verstehen sind. Daneben lassen sich ebenfalls Speiseeis, Dessertgerichte, Milchdrinks oder Salatdressings mit der o.g. Kombination färben.

Die Erfindung betrifft außerdem vorgefertigte Mischungen von Lebensmittelfarbstoffen, die
a) Carotinoide, insbesondere β-Carotin und
b) Riboflavin oder Riboflavinderivate oder deren Mischung
in einem Verhältnis (a : b) von 1 : 25 bis 1 : 1000, bevorzugt 1 : 30 bis 1 : 1000, besonders bevorzugt 1 : 30 bis 1 : 100 enthalten.

Gegebenenfalls können diesen Mischungen weitere Bestandteile wie Antioxidantien, beispielsweise Ascorbinsäure und Ascorbinsäurederivate, Tocopherol oder Butylhydroxytoluol sowie weitere Lebensmittelfarbstoffe, wie z.B. Sicovit® Chinolingelb 70 E 104, Sicovit® Gelborange 85 E 110, Sicovit® Erythrosin 85 E 127 (alle drei Fa. BASF), FD&C Yellow No. 5, FD&C Yellow No. 6 oder FD&C Red No. 40 zugesetzt werden.

Diese fertigen Mischungen von Lebensmittelfarbstoffen können vom Anwender, beispielsweise der Lebensmittelindustrie, insbesondere von Molkereien direkt zum Färben ihrer Produkte eingesetzt werden.

Es ist aber auch möglich, das Carotinoid, insbesondere β-Carotin sowie Riboflavin oder Riboflavinderivate oder deren Mischung separat den zu färbenden Lebensmitteln in den oben genannten Verhältnissen zuzusetzen, um dadurch eine Stabilität der Farbe zu erzielen.

Gegenstand der Erfindung sind weiterhin Lebensmittel, die
a) Riboflavin-entfärbende Mikroorganismen oder andere, die Entfärbung von Riboflavin bewirkende Stoffe,
b) Carotinoide, insbesondere β-Carotin und
c) Riboflavin oder Riboflavinderivate oder ein Gemisch davon
enthalten, wobei die Komponenten b) und c) in einem Verhältnis von 1 : 25 bis 1 : 1000, bevorzugt von 1 : 30 bis 1 : 1000, besonders bevorzugt von 1 : 30 bis 1 : 100 vorliegen.

Mit dem unter a) genannten Begriff "Mikroorganismen" sind beispielsweise Hefen oder andere in Milchprodukten übliche Mikroorganismen, insbesondere Milchsäurebakterien gemeint.

Die Menge an Riboflavin und/oder Riboflavinderivaten im fertigen Endprodukt liegt dabei im Bereich von 5 bis 200 ppm, bevorzugt im Bereich von 15 bis 100 ppm, besonders bevorzugt von 20 bis 50 ppm.

Das zur Farbstabilisierung von Riboflavin verwendete Carotinoid ist im Endprodukt in einer Konzentration von 0,1 bis 3,0 ppm, vorzugsweise 0,2 bis 2,0 ppm enthalten.

In den nachfolgenden Beispielen wird die erfindungsgemäße Verwendung von Carotinoiden, insbesondere β-Carotin zur Farbstabilisierung von Riboflavin und Riboflavinderivaten näher erläutert.

### Beispiel 1:

### Herstellung einer β-Carotin Stammlösung

1 g β-Carotin-Trockenpulver (β-Carotin 10% CWD, BASF) mit einem Gehalt an β-Carotin von 10 Gew.-% wurden langsam auf die gerührte Oberfläche von 99 ml Wasser gegeben und bis zur Bildung einer homogenen Dispersion gerührt.

1 mg (1 ml) dieser Stammlösung per kg Endprodukt entspricht einer β-Carotin Konzentration von 1 ppm.

### Beispiel 2:

### Einfärben von Joghurt

a. Vergleichsprobe:
   200 g Naturjoghurt wurden mit 20 ppm Riboflavin versetzt und mit einem Löffel homogenisiert. Der hellgelb-grün gefärbte Joghurt wurde in Twist-off-Gläser abgefüllt und bei 6°C im Kühlschrank gelagert.
b. Probe 1:
   200 g Naturjoghurt wurden mit 20 ppm Riboflavin und 0,1 ml der β-Carotin Stammlösung (=0,5 ppm β-Carotin) versetzt und mit einem Löffel homogenisiert. Der hellgelb-grün gefärbte Joghurt wurde in Twist-off-Gläser abgefüllt und bei 6°C im Kühlschrank gelagert.
c. Probe 2:
   200 g Naturjoghurt wurden mit 40 ppm Riboflavin und 0,2 ml der β-Carotin Stammlösung (= 1 ppm β-Carotin) versetzt und mit einem Löffel homogenisiert. Der im Vergleich zu Probe a. etwas intensiver (aber im gleichen Farbton) gefärbte Joghurt wurde in Twist-off-Gläser abgefüllt und bei 6°C im Kühlschrank gelagert.
d. Probe 3:
   200 g Naturjoghurt wurden mit 50 ppm Riboflavin und 0,3 ml der β-Carotin Stammlösung (= 1,5 ppm β-Carotin) versetzt und mit einem Löffel homogenisiert. Der im Vergleich zu Probe a. etwas intensiver (aber im gleichen Farbton) gefärbte Joghurt wurde in Twist-off-Gläser abgefüllt und bei 6°C im Kühlschrank gelagert.

### Stabilitätsuntersuchung:

Alle vier Joghurtmischungen wurden über 40 Tage im Kühlschrank aufbewahrt und regelmäßig auf ihre Färbung hin überprüft.

### Ergebnis:

a. Vergleichsprobe:
   Bereits nach einem Tag Lagerung wurde eine Entfärbung der unteren Joghurtschichten im Glas beobachtet.
      Bei Entnahme von entfärbtem Joghurt und erneutem Homogenisieren dieser Probe kam es innerhalb von 30 bis 60 sek. wieder zur Ausbildung einer Gelbfärbung mit der ursprünglichen Intensität.
      An Stellen, wo Luftblasen im Joghurt eingeschlossen waren, trat um die Luftblasen herum keine Entfärbung auf.
b. Probe 1:
   keine Farbveränderung nach 40 Tagen Lagerung
c. Probe 2:
   keine Farbveränderung nach 40 Tagen Lagerung
d. Probe 3:
   keine Farbveränderung nach 40 Tagen Lagerung

### Beispiel 3:

### Einfärben von Joghurt

a. Vergleichsprobe:
   170 g Naturjoghurt wurden mit einem Gemisch aus 30 g Fruchtkonzentrat und 20 ppm Riboflavin, bezogen auf die Gesamtmenge, versetzt und mit einem Löffel homogenisiert. Der hellgelb-grün gefärbte Joghurt wurde in Twist-off-Gläser abgefüllt und bei 6°C im Kühlschrank gelagert.
b. Probe 1:
   170 g Naturjoghurt wurden mit einem Gemisch aus 30 g Fruchtkonzentrat, 20 ppm Riboflavin, bezogen auf die Gesamtmenge, und 0,1 ml der β-Carotin Stammlösung (= 0,5 ppm β-Carotin) versetzt und mit einem Löffel homogenisiert. Der hellgelb-grün gefärbte Joghurt wurde in Twist-off-Gläser abgefüllt und bei 6°C im Kühlschrank gelagert.
c. Probe 2:
   170 g Naturjoghurt wurden mit einem Gemisch aus 30 g Fruchtkonzentrat, 40 ppm Riboflavin, bezogen auf die Gesamtmenge, und 0,2 ml der β-Carotin Stammlösung (= 1 ppm β-Carotin) versetzt und mit einem Löffel homogenisiert. Der im Vergleich zu Probe a. etwas intensiver (aber im gleichen.Farbton) gefärbte Joghurt wurde in Twist-off-Gläser abgefüllt und bei 6°C im Kühlschrank gelagert.
d. Probe 3:
   170 g Naturjoghurt wurden mit einem Gemisch aus 30 g Fruchtkonzentrat, 50 ppm Riboflavin, bezogen auf die Gesamtmenge, und 0,3 ml der β-Carotin Stammlösung (= 1,5 ppm β-Carotin) versetzt und mit einem Löffel homogenisiert. Der im Vergleich zu Probe a. etwas intensiver (aber im gleichen Farbton) gefärbte Joghurt wurde in Twist-off-Gläser abgefüllt und bei 6°C im Kühlschrank gelagert.

### Stabilitätsuntersuchung:

Analog Beispiel 2 wurden alle vier Joghurtmischungen über 40 Tage im Kühlschrank aufbewahrt und regelmäßig auf ihre Färbung hin überprüft.

### Ergebnis:

Die Ergebnisse der Farbstabilitätsuntersuchungen waren identisch mit denen von Beispiel 2a bis d.

## Patentansprüche

1. Verwendung von Carotinoiden als Farbstabilisator von Riboflavin und Riboflavinderivaten, **dadurch gekennzeichnet, daß** das Carotinoid in Kombination mit Riboflavin und/oder Riboflavinderivaten in einer Menge eingesetzt wird, die ausreicht, um als Farbstabilisator, nicht aber um als färbendes Agens zu wirken.

2. Mischungen von Lebensmittelfarbstoffen, enthaltend Carotinoide und Riboflavin und/oder Riboflavinderivate in einem Gewichtsverhältnis von 1 : 25 bis 1 : 1000.

3. Molkereiprodukte, enthaltend
a) Riboflavin-entfärbende Mikroorganismen oder andere, die Entfärbung von Riboflavin bewirkende Stoffe,
b) Carotinoide und
c) Riboflavin und/oder Riboflavinderivate,
wobei die Komponenten b) und c) in einem Gewichtsverhältnis von 1 : 25 bis 1 : 1000 vorliegen.

4. Molkereiprodukte nach Anspruch 3, **dadurch gekennzeichnet, daß** es sich dabei um Frischkäse-, Quark-, Kefir-, Dickmilch-, Buttermilch- oder Joghurtzubereitungen handelt.

5. Molkereiprodukte nach den Ansprüchen 3 und 4 mit einem Gehalt an Riboflavin im Bereich von 5 bis 200 ppm.

## Claims

1. The use of carotenoids as stabilizer of the color of riboflavin and riboflavin derivatives, wherein the carotenoid, in combination with riboflavin and/or riboflavin derivatives, is used in an amount which is sufficient to act as a stabilizer of the color, but not as a colorant.

2. A mixture of food colors comprising carotenoids and riboflavin and/or riboflavin derivatives in a weight ratio of from 1 : 25 to 1 : 1000.

3. A dairy product comprising
a) riboflavin-decolorizing microorganisms or other materials effecting the decolorizing of riboflavin,
b) carotenoids and
c) riboflavin and/or riboflavin derivatives,
the components b) and c) being present in a weight ratio of from 1 : 25 to 1 : 1000.

4. A dairy product as claimed in claim 3, wherein it is a fresh cheese preparation, a quark preparation, a kefir preparation, a fermented milk preparation, a buttermilk preparation or a yoghurt preparation.

5. A dairy product as claimed in claim 3 or 4 having a riboflavin content of from 5 to 200 ppm.

## Revendications

1. Utilisation de caroténoïdes en tant que stabilisants de couleur pour la riboflavine et ses dérivés, **caractérisée par le fait que** l'on utilise le caroténoïde en combinaison avec la riboflavine et/ou ses dérivés en quantité suffisante pour qu'il agisse en tant que stabilisant de couleur mais non en tant qu'agent colorant.

2. Mélanges de colorants alimentaires contenant des caroténoïdes et de la riboflavine et/ou des dérivés de la riboflavine dans des proportions relatives en poids de 1 : 25 à 1 : 1000.

3. Produits laitiers contenant
a) des microorganismes décolorant la riboflavine ou d'autres substances qui provoquent une décoloration de la riboflavine,
b) des caroténoïdes et
c) de la riboflavine et/ou des dérivés de la riboflavine,
les composants b) et c) étant présents dans des proportions relatives en poids de 1 : 25 à 1 : 1000.

4. Produits laitiers selon revendication 3, **caractérisés en ce qu'**il s'agit de fromages frais, de lait caillé, de kéfir, de petit-lait, de babeurre ou de yaourts.

5. Produits laitiers selon les revendications 3 et 4, contenant de la riboflavine en quantité de 5 à 200 ppm.
